# DEMANDE DE BREVET EUROPEEN

(11) **EP 0 571 286 A1**
(43) Date de publication de la demande: **24.11.1993**
(21) Numéro de dépôt: 93401295.6
(22) Date de dépôt: 19.05.1993
(51) Int. Cl.: F16L 37/10, F16L 39/00

(54) **Dispositif d'assemblage rapide d'un organe tubulaire à un embout ou d'un ensemble d'organes tubulaires à des embouts**

(30) Priorité: 21.05.1992 FR 9206196
(71) Demandeur: HUTCHINSON, F-75008 Paris (FR)
(72) Inventeur: Godeau, Denis, F-45260 Vieilles Maisons/Joudey (FR); Exandier, Philippe, F-45200 Montargis (FR)
(74) Mandataire: Orès, Bernard

(57) **Abrégé**

Dispositif de raccord rapide d'un organe tubulaire à un embout ou d'un ensemble d'organes tubulaires à des embouts, notamment pour l'assemblage des tuyaux d'eau ou durites du circuit de refroidissement d'un moteur de véhicule automobile aux embouts d'entrée et de sortie d'un échangeur de chaleur ou aérotherme dudit véhicule.

Il comprend une bague élastique de verrouillage (40) propre à être rapportée sur les organes tubulaires et découpée pour ménager au moins une partie extensible (45,46), ladite bague (40) comportant sur sa surface interne des bossages radiaux (52) qui reposent sur lesdits organes tubulaires dans une première position en laquelle le raccord n'est pas assemblé, tandis qu'ils sont déplacés, -à l'introduction desdits embouts dans les organes tubulaires-, par des faces de butée associées aux embouts pour être amenés dans des ouvertures de passage des organes tubulaires et des gorges des embouts.

## Description

La présente invention est relative à un dispositif d'assemblage rapide d'un organe tubulaire à un embout ou d'un ensemble d'organes tubulaires à des embouts et, notamment, à un dispositif d'assemblage des tuyaux d'eau du circuit de refroidissement d'un moteur de véhicule automobile aux embouts d'entrée et de sortie d'un échangeur de chaleur ou aérotherme dudit véhicule.

On connaît déjà des dispositifs de ce genre dans lesquels l'assemblage est obtenu par encliquetage de parties saillantes, telles que des pattes élastiques portées par une partie du raccord et qui coopèrent avec des évidements de formes complémentaires portés par la partie conjuguée. En cas de cassure des parties saillantes d'encliquetage il faut donc remplacer la totalité du raccord, ce qui comporte des inconvénients économiques considérables. En outre, la plupart des dispositifs d'assemblage existants ne permettent pas de s'assurer que l'assemblage a effectivement eu lieu de façon satisfaisante lors du montage du raccord, ce qui n'est pas admissible dans ce genre d'application.

Si l'on a déjà proposé, dans FR-2 660 405, un dispositif d'assemblage entre un premier embout et un deuxième embout d'un circuit hydraulique, ces deux embouts étant destinés à s'emboîter axialement l'un dans l'autre et à comprimer radialement entre eux un joint annulaire d'étanchéité, avec une bague de verrouillage destinée à être rapportée sur un des deux embouts et comportant au moins deux ergots radiaux destinés à s'encliqueter dans des logements correspondants ménagés dans les deux embouts lorsqu'ils sont emboîtés l'un dans l'autre, un tel dispositif ne fournit une indication quant au montage satisfaisant ou non du raccord qu'à l'aide de moyens complexes.

C'est, par conséquent, un but de l'invention de fournir un dispositif d'assemblage qui ne présente pas les inconvénients précités et qui réponde mieux aux nécessités de la pratique que les dispositifs antérieurement connus, notamment en ce qu'il est possible de visualiser de façon sûre la condition dans laquelle l'assemblage est effectivement réalisé.

C'est, aussi, un but de l'invention de fournir un tel dispositif n'exigeant pour sa mise en oeuvre qu'un faible effort de montage et qui, en outre, ne présente pas de risque de démontage accidentel.

Un dispositif de raccord rapide d'un organe tubulaire à un embout ou d'un ensemble d'organes tubulaires à des embouts, notamment pour l'assemblage des tuyaux d'eau ou durites du circuit de refroidissement d'un moteur de véhicule automobile aux embouts d'entrée et de sortie d'un échangeur de chaleur ou aérotherme dudit véhicule, l'étanchéité entre l'organe tubulaire et l'embout ou les organes tubulaires et les embouts étant assurés par un ou des joint(s) interposé(s) entre eux est caractérisé , selon l'invention, en ce que :
. le ou lesdits organes tubulaires présente(nt) chacun une ouverture de passage dirigée sensiblement transversalement à l'axe longitudinal dudit ou desdits organes ;
. un ou des embout(s) présente(nt) chacun, à distance d'une face de butée, une gorge dirigée en correspondance du (des) passage(s) du ou des organes tubulaires ; et en ce qu'il comprend :
. une bague élastique de verrouillage propre à être rapportée sur le ou les organes tubulaires et découpée pour ménager au moins une partie extensible, ladite bague comportant sur sa surface interne des bossages radiaux qui reposent sur le ou lesdits organes tubulaires dans une première position en laquelle le raccord n'est pas assemblé et en laquelle la ou lesdites partie(s) extensible(s) est(sont) de plus grande dimension, tandis que lesdits bossages sont déplacés -à l'introduction du dit embout dans ledit organe tubulaire ou desdits embouts dans les organes tubulaires-, par les faces de butée pour être amenés sous l'action des forces élastiques développées par la ou lesdites partie(s) extensible(s) qui tend(ent) à diminuer de dimension en une seconde position, -qui est celle d'assemblage du raccord-, en laquelle lesdits bossages sont logés à la fois dans les ouvertures de passage du ou des organes tubulaires et dans les gorges du ou des embouts.

Dans un tel dispositif, où l'assemblage du ou des organes tubulaires à un ou aux embouts résulte d'un simple mouvement d'introduction des seconds dans les premiers, l'état de verrouillage satisfaisant de l'assemblage est déterminé visuellement par l'observation de la ou des partie(s) extensible(s) de la bague élastique de verrouillage.

Pour encore faciliter la détermination de l'état de verrouillage correct de l'assemblage, l'invention propose de constituer les bossages radiaux de la bague sous forme d'ergots en partie découpés dans la bague sur laquelle ils sont articulés à une de leurs extrémités pour, -dans la condition non assemblée du raccord-, faire saillie sur la surface externe de ladite bague élastique de verrouillage.

Dans une réalisation du dispositif, les embouts sont reliés par une pièce de liaison souple ou, en variante, une pièce rigide, comme une entretoise.

L'invention sera bien comprise par la description qui suit, faite à titre d'exemple et en référence au dessin annexé dans lequel :
- la figure 1 est une vue en perspective éclatée d'une partie de dispositif selon l'invention ;
- la figure 2 est une vue en coupe de la bague élastique de verrouillage ;
- la figure 3 est une vue en coupe avant assemblage du dispositif ;
- la figure 4 est une vue analogue à celle de la figure 3, mais après assemblage ;
- la figure 5 est une vue en coupe selon la ligne 5-5 de la figure 4 ;
- la figure 6 est une vue schématique en perspective du dispositif après assemblage ;
- la figure 7 est une vue analogue à celle de la figure 1 mais pour une variante de réalisation ;
- la figure 8 est une vue schématique en perspective d'une partie du raccord avant montage pour cette forme de réalisation ;
- la figure 9 est une vue analogue à celle de la figure 5 pour ladite variante de réalisation.

Le dispositif de raccord illustré aux figures est du type de ceux destinés à l'assemblage rapide d'un ensemble d'organes tubulaires à des embouts par exemple, -mais sans que cette indication ait quelque caractère limitatif que ce soit-, au raccordement d'organes tubulaires 10 et 11 auxquels sont fixés des tuyaux souples ou durites 12 et 14 à des embouts 14 et 15 faisant saillie d'un échangeur de chaleur ou aérotherme 16, en fait et plus précisément, de la boîte à eau d'un tel échangeur de chaleur. Il va de soi, cependant, que l'invention n'est pas limitée à un tel dispositif, mais trouve application à tous raccords permettant un montage et un démontage rapides d'un ensemble d'organes tubulaires à des embouts à l'aide d'une bague élastique ou encore d'un seul organe tubulaire à un seul embout.

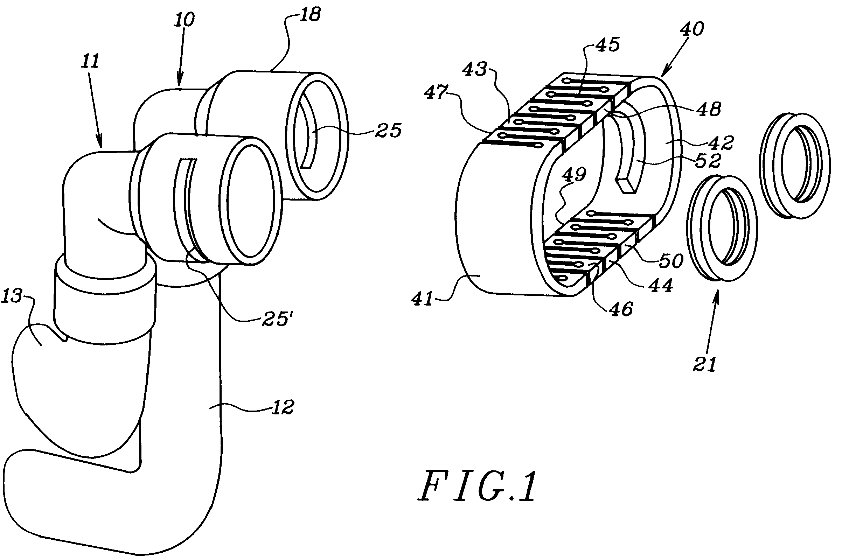

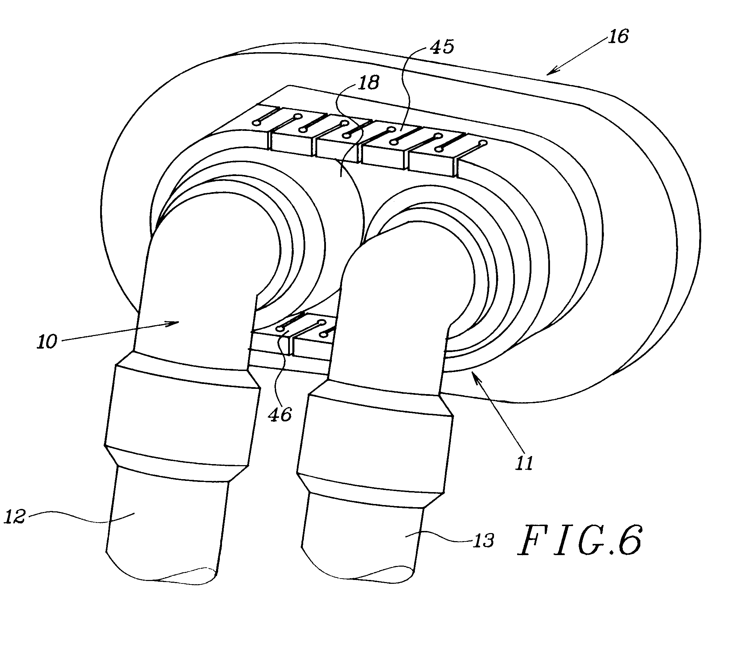

L'organe tubulaire 10, avantageusement en matière plastique moulée, est conformé suivant des parties cylindriques 16, 17, 18 de diamètres progressivement croissants et qui ménagent ainsi un premier épaulement 19 et un second épaulement 20 sur lequel prend appui un joint d'étanchéité 21, figure 1, du type à lèvres avec armature, l'organe tubulaire 11 étant de même forme avec des parties correspondantes désignées par les mêmes références mais frappées de l'indice " ' ". La partie cylindrique 18 de l'organe tubulaire 10 qui est la plus distante du tuyau souple 12 qui lui est associé est découpée suivant une ouverture de passage 25 en forme de fente dirigée transversalement à l'axe A de l'organe tubulaire, la fente 25' de l'organe tubulaire 11 analogue à la fente 25 étant symétrique de la première par rapport à un plan moyen P. Les fentes 25 et 25' règnent chacune sur une envergure angulaire d'environ 90°, figure 5, et entre elles et l'extrémité libre de chacun des organes tubulaires 10 et 11, la partie cylindrique de plus grand diamètre 18, 18' présente une creusure 26, 26', non traversante, et dont la section droite est quelque peu trapézoïdale avec une rampe tronconique 27 adjacente à l'ouverture de passage ou fente 25.

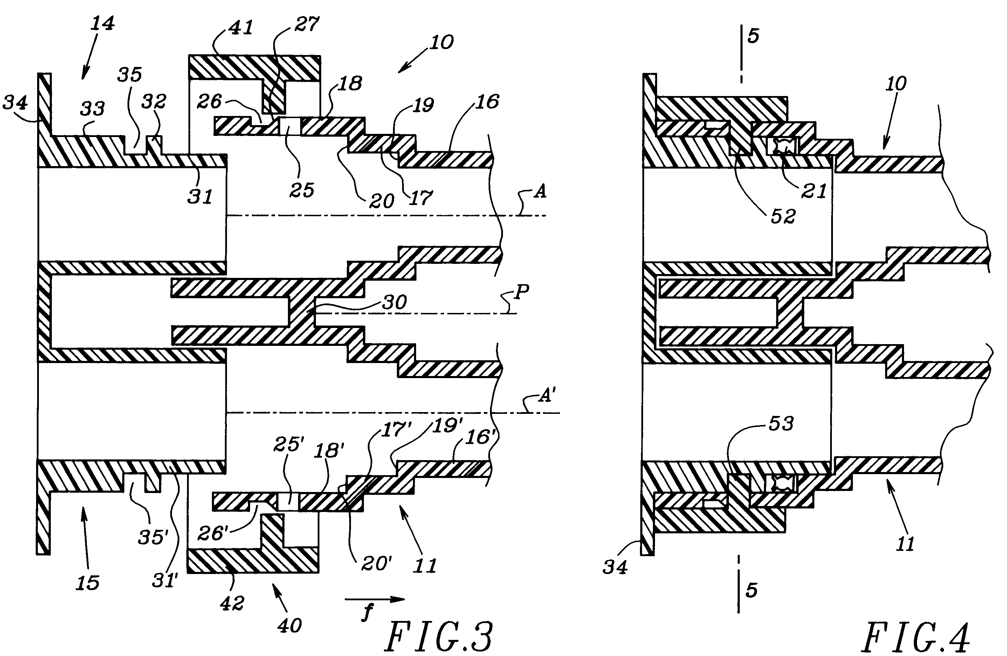

Les deux organes 10 et 11 (de même forme et dont les parties correspondantes portent les mêmes références mais frappées de l'indice "'" pour l'organe 11) sont réunis par une entretoise 30 de sorte qu'ils forment un ensemble unitaire susceptible d'être assemblé par encliquetage aux embouts 14 et 15 de la boîte à eau. Chacun de ces derniers comporte une partie cylindrique 31 pour l'organe 10 et 31' pour l'organe 11, dont le diamètre extérieur est conjugué de celui de la partie cylindrique 17, 17' de l'organe tubulaire 10 ou 11 et qui est légèrement supérieur à celui du diamètre interne du joint d'étanchéité 21, lequel est logé dans l'épaulement 19 de l'organe tubulaire et y est bloqué de façon à ne pouvoir être perdu, même en cas de démontage du raccord. A distance de son extrémité libre, chaque embout 14, 15, présente une collerette 32 qui limite avec une partie cylindrique 33 adjacente à une face de butée 34 de la boîte à eau une gorge 35 de même envergure angulaire que celle des fentes 25, 25', les gorges 35 de l'embout 14 et 35' de l'embout 15 étant dirigées en correspondance desdites fentes 25, 25', symétriquement par rapport à un plan P' qui est un plan de symétrie des embouts 14 et 15 et de la boîte à eau au voisinage desdits embouts (figure 3).

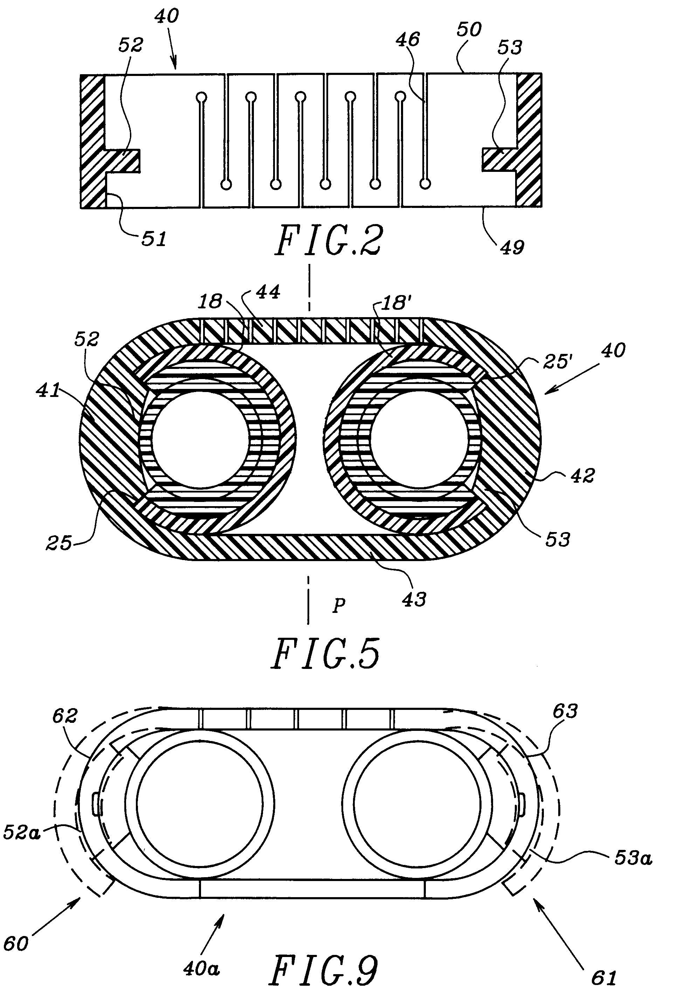

Pour l'assemblage rapide de l'ensemble des organes tubulaires 10 et 11 aux embouts 14 et 15, l'invention prévoit d'associer auxdits organes tubulaires une bague élastique de verrouillage 40, figures 1 et 2 laquelle, avantageusement réalisée en une matière plastique suffisamment résistante et élastique, est conformée suivant un anneau aplati avec deux parties cylindriques diamétralement opposées 41 et 42 réunies entre elles par des parties sensiblement planes, 43 et 44, extensibles par le fait qu'elles sont découpées chacune suivant une multiplicité de fentes axiales borgnes, comme 45 pour la partie 43 et 46 pour la partie 44, lesdites fentes borgnes débouchant alternativement sur un des bords opposés comme 47 et 48 pour la partie 43 et 49, 50 pour la partie 44. La bague élastique de verrouillage 40 présente sur sa surface interne 51, de façon plus précise sur chacune de ses parties cylindriques 41 et 42, des bossages radiaux 52 et 53 qui règnent sur sensiblement la même envergure angulaire que celles des ouvertures 25 et des gorges 35, d'une part et qui, d'autre part, sont disposés en correspondance desdites ouvertures et gorges, symétriquement par rapport à un plan moyen de symétrie confondu avec les plans P, et P' lorsque le dispositif de raccord est assemblé.

Pour un tel assemblage, on rapporte d'abord la bague élastique 40 sur les organes tubulaires 10 et 11 en la positionnant de manière que les bossages radiaux 52 et 53 soient logés dans les creusures 26 et 26' des organes tubulaires. Dans cette première position, figure 3, les parties extensibles 43 et 44 ont leur plus grande dimension longitudinale : les bords des fentes 45 et 46 sont écartés les uns des autres et l'observation de la bague indique qu'elle n'est pas en condition assemblée.

Lorsque, à partir de cette première position, l'ensemble que forment les organes tubulaires 10 et 11 et les durites qui leur sont associées est rapproché des embouts 14 et 15, les faces de butée 34 de la boîte à eau viennent à un moment donné au contact de la bague élastique 40 ; celle-ci est déplacée à translation dans le sens de la flèche f, figure 3 et, lorsque les rampes comme 27 sont franchies et que les gorges 35, 35' sont en regard des ouvertures de passage 25, 25', les forces élastiques développées par les parties extensibles de la bague font pénétrer les bossages radiaux 52 et 53 de ladite bague dans les ouvertures de passage 25, 25' des organes tubulaires et les gorges 35, 35' des embouts. La condition est alors celle montrée sur la figure 4 qui est celle d'assemblage étanche du raccord.

L'effort de montage est faible, pratiquement limité à la seule compression des joints d'étanchéité 21, par exemple de l'ordre de ou inférieur à 5 daN, étant donné que la bague élastique 40 est montée sous tension sur les organes tubulaires 10 et 11 dans sa position d'attente préalablement à l'encliquetage.

Un démontage accidentel de la bague est impossible, le démontage exigeant pour dégager les bossages radiaux 52 et 53 des ouvertures de passage et des fentes respectives où ils sont logés une rotation de la bague autour de l'axe longitudinal du dispositif.

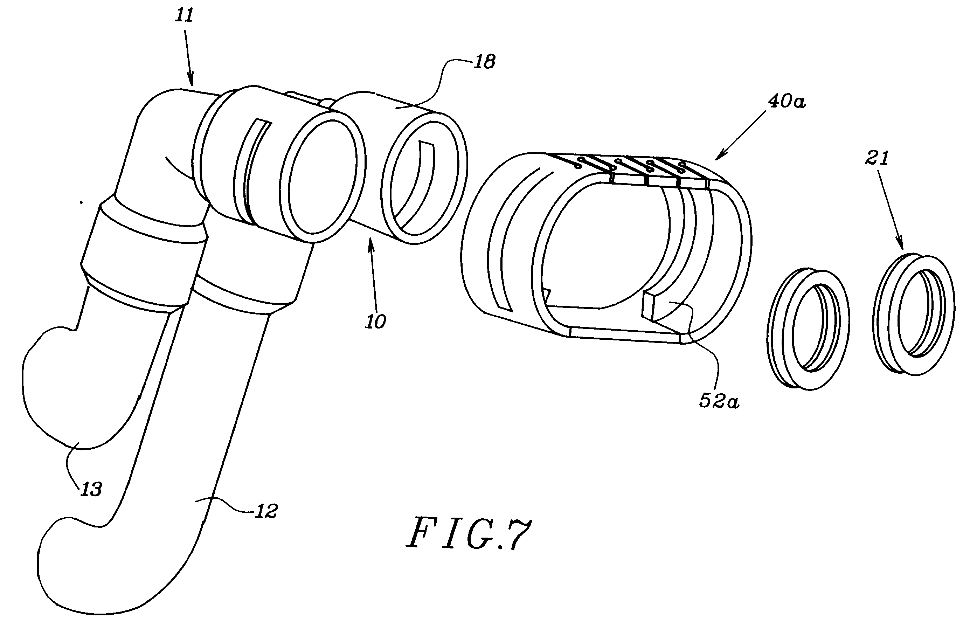

Dans la condition assemblée du raccord, les parties extensibles 43 et 44 ont leur longueur minimale : les bords des fentes borgnes comme 45 et 46 sont sensiblement adjacents et l'aspect de la bague indique alors clairement que l'assemblage est satisfaisant, figure 6.

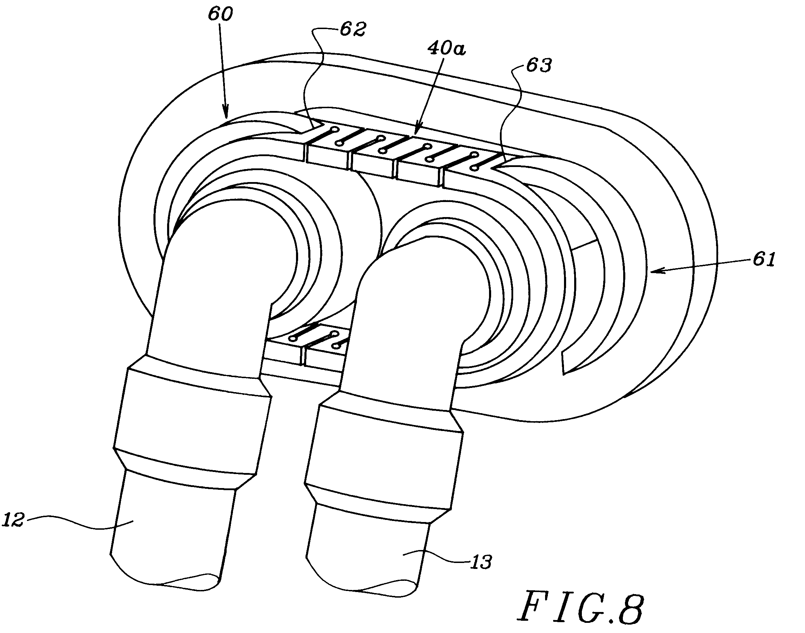

Pour rendre cette constatation encore plus facile l'invention prévoit, dans une variante de réalisation, figures 7 à 9, de constituer les bossages radiaux 52a et 53a de la bague d'étanchéité 40a, -pour le reste identique à la bague 40-, sous forme d'ergots 60 et 61 découpés dans la bague sur laquelle ils sont articulés à une de leurs extrémités 62 et 63, respectivement. Dans la condition non assemblée du raccord, figure 8, les ergots font saillie sur la surface externe de la bague 40a alors rapportée sur les organes tubulaires 10 et 11 (comme montré en tirets sur la figure 9) de sorte que cette condition de non assemblage est parfaitement et immédiatement perceptible. Lorsque, par contre, l'assemblage du raccord est réalisé, -c'est-à-dire que les bossages radiaux 52a et 53a sont logés dans les ouvertures de passage et les gorges respectives des organes tubulaires des embouts-, aucune saillie n'est apparente ou pratiquement apparente sur la surface externe de la bague, traduisant ainsi qu'un assemblage satisfaisant a été réalisé.

L'invention n'est pas, bien entendu, limitée aux formes de réalisation qui viennent d'être décrites.

Ainsi, elle envisage dans son cadre, des réalisations dans lesquelles les embouts ne sont pas liés rigidement l'un à l'autre mais, au contraire, avec une certaine possibilité d'adaptation et cela en les réunissant par une entretoise semblable à l'entretoise 30 mais douée d'une certaine souplesse obtenue, par exemple, par un assemblage avec jeu ou à l'aide de deux demi-pièces elles-mêmes réunies avec jeu ou possibilité de déplacement.

## Revendications

1. Dispositif de raccord rapide d'un organe tubulaire à un embout ou d'un ensemble d'organes tubulaires à des embouts, notamment pour l'assemblage des tuyaux d'eau ou durites du circuit de refroidissement d'un moteur de véhicule automobile aux embouts d'entrée et de sortie d'un échangeur de chaleur ou aérotherme dudit véhicule, l'étanchéité entre l'organe tubulaire et l'embout ou les organes tubulaires et les embouts étant assurés par un ou des joint(s) interposé(s) entre eux, caractérisé en ce que :
. le ou lesdits organes tubulaires (10, 11), présente(nt) chacun une ouverture de passage (25, 25') dirigée sensiblement transversalement à l'axe longitudinal (A) dudit ou desdits organes tubulaires (10, 11) ;
. un ou des embouts (14, 15) présente(nt) chacun, à distance d'une face de butée (34), une gorge (35, 35') dirigée en correspondance du (des) passage(s) du ou des organes tubulaires ; et en ce qu'il comprend :
. une bague élastique de verrouillage (40, 40a) propre à être rapportée sur le ou les organes tubulaires (10, 11) et découpée pour ménager au moins une partie extensible (45, 46), ladite bague (40, 40a) comportant sur sa surface interne (51) des bossages radiaux (52, 53 ; 52a, 53a) qui reposent sur le ou lesdits organes tubulaires dans une première position en laquelle le raccord n'est pas assemblé et en laquelle la ou lesdites partie(s) extensible(s) (45, 46) est(sont) de plus grande dimension, tandis que lesdits bossages radiaux (52, 53 ; 52a, 53a) sont déplacés, -à l'introduction dudit embout dans ledit organe tubulaire ou desdits embouts dans les organes tubulaires-, par les faces de butée (34) qui viennent coopérer avec la bague élastique pour être amenés sous l'action des forces élastiques développées par la ou les partie(s) extensible(s) (45, 46) qui tend(ent) à diminuer de dimension en une seconde position, -qui est celle d'assemblage du raccord-, et en laquelle lesdits bossages radiaux sont logés à la fois dans les ouvertures de passage (25, 25') du ou des organes tubulaires et dans les gorges (35, 35') du ou desdits embouts (14, 15).

2. Dispositif selon la revendication 1, caractérisé en ce que les bossages radiaux (52a, 53a) sont constitués sous forme d'ergots (60, 61) en partie découpés dans la bague sur laquelle ils sont articulés à une de leurs extrémités (62, 63) pour, -dans la condition non assemblée du raccord-, faire saillie sur la surface externe de ladite bague élastique de verrouillage (40a).

3. Dispositif selon la revendication 1 ou 2, caractérisé en ce les embouts (14, 15) sont réunis par une pièce de liaison souple.

4. Dispositif selon la revendication 1 ou 2, caractérisé en ce que les embouts (14, 15) sont réunis par une pièce de liaison rigide.
